(19) Europäisches Patentamt
European Patent Office
Office européen des brevets

(11) Veröffentlichungsnummer: **0 019 787**
**B1**

# (12) EUROPÄISCHE PATENTSCHRIFT

(45) Veröffentlichungstag der Patentschrift: **14.03.84**

(21) Anmeldenummer: **80102618.8**

(22) Anmeldetag: **12.05.80**

(51) Int. Cl.³: **C 07 C 69/743,** C 07 C 121/75, C 07 C 61/39, A 01 N 53/00, C 07 C 121/70

## (54) 2-Phenyl-alken-1-yl-cyclopropan-carbonsäureester, Verfahren zu ihrer Herstellung sowie ihre Verwendung als Insektizide und Akarizide und Zwischenprodukte zu ihrer Herstellung.

(30) Priorität: **23.05.79 DE 2920947**

(43) Veröffentlichungstag der Anmeldung: **10.12.80 Patentblatt 80/25**

(45) Bekanntmachung des Hinweises auf die Patenterteilung: **14.03.84 Patentblatt 84/11**

(84) Benannte Vertragsstaaten: **BE CH DE FR GB IT LI NL**

(56) Entgegenhaltungen: **DE - A - 2 738 150**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Fuchs, Rainer, Dr., Roeberstrasse 8, D-5600 Wuppertal-1 (DE)**
Erfinder: **Hammann, Ingeborg, Dr., Belfortstrasse 9, D-5000 Köln 1 (DE)**
Erfinder: **Homeyer, Bernard, Dr., Obere Strasse 28, D-5090 Leverkusen 3 (DE)**
Erfinder: **Stendel, Wilhelm, Dr., In den Birken 55, D-5600 Wuppertal-1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 019 787 B1

BUNDESDRUCKEREI BERLIN

# 2-Phenyl-alken-1-yl-cyclopropan-carbonsäureester, Verfahren zu ihrer Herstellung sowie ihre Verwendung als Insektizide und Akarizide und Zwischenprodukte zu ihrer Herstellung

Die Erfindung betrifft neue 2-Phenyl-alken-1-yl-cyclopropan-carbonsäureester, ein Verfahren zu ihrer Herstellung, ihre Verwendung als Insektizide und Akarizide und Zwischenprodukte zu ihrer Herstellung.

Es ist bekannt, daß bestimmte 2-Phenyl-alken-1-yl-cyclopropan-carbonsäureester, wie z. B. 3-(2-Phenyl-vinyl)-2,2-dimethyl-cyclopropan-1-carbonsäure-(3-phenoxy-benzyl)-ester und 3-(2-(4-Chlor-phenyl)-vinyl)-2,2-dimethylcyclopropan-1-carbonsäure-(3-phenoxy-$\alpha$-cyano-benzyl)-ester, insektizid und akarizid wirksam sind (vergleiche DE-OS 2 706 184, 2 738 150 und 2 730 515).

Die Wirkung dieser Verbindungen ist jedoch, insbesondere bei niedrigen Wirkstoffkonzentrationen und Aufwandmengen, nicht immer zufriedenstellend.

Die vorliegende Erfindung betrifft

(1) neue 2-Phenyl-alken-1-yl-cyclopropan-carbonsäureester der Formel I

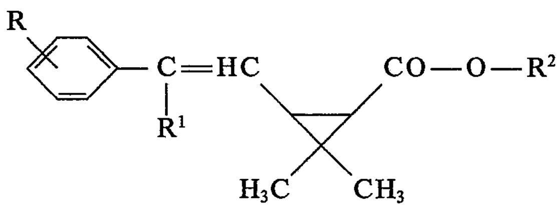

(I)

in welcher

R für Wasserstoff oder Halogen steht,
$R^1$ für gegebenenfalls halogen-substituiertes Alkyl steht und
$R^2$ für einen Rest der Formel

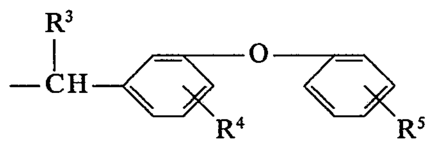

wobei

$R^3$ für Wasserstoff, CN, $-C{\equiv}CH$, $-CH_3$, $-C_2H_5$ steht,
$R^4$ und $R^5$ gleich oder verschieden sind und für Wasserstoff, Fluor, Chlor oder Brom stehen,

steht mit Ausnahme von 3-(2-Phenyl-2-trifluormethylvinyl)-2,2-Mimethyl-cyclopropan-1-carbonsäure-3-phenoxybenzylester.

(2) ein Verfahren zur Herstellung von 2-Phenyl-alken-1-yl-cyclopropan-carbonsäureestern der Formel (I), dadurch gekennzeichnet, daß man 2-Phenyl-alken-1-yl-cyclopropan-carbonsäuren der Formel II

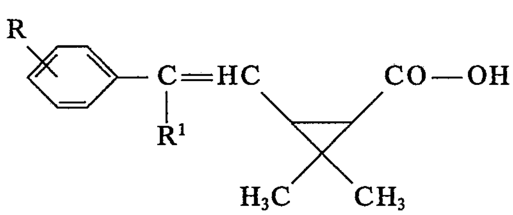

(II)

in welcher

R und $R^1$ die oben angegebenen Bedeutungen haben,
oder reaktionsfähige Derivate derselben, mit Alkoholen der Formel III

$$HO-R^2 \qquad \text{(III)}$$

in welcher

$R^2$ die oben angegebene Bedeutung hat, oder mit reaktionsfähigen Derivaten derselben, gegebenenfalls in Gegenwart eines Säureakzeptors und gegebenenfalls unter Verwendung von Verdünnungsmitteln umsetzt.

(3) neue 2-Phenyl-alken-1-yl-cyclopropan-carbonsäuren der Formel II

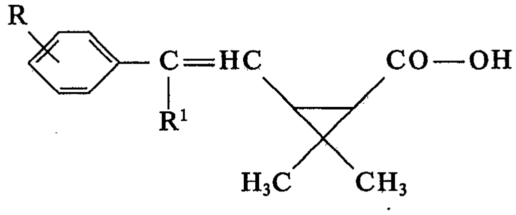

(II)

in welcher

R und $R^1$ die unter (1) angegebenen Bedeutungen haben.

(4) ein Verfahren zur Herstellung von 2-Phenyl-alken-1-yl-cyclopropancarbonsäuren der Formel II, das dadurch gekennzeichnet ist, daß man Alkylester der Formel II b

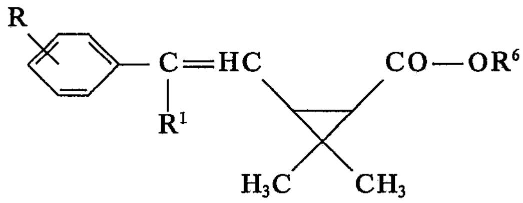

(IIb)

in welcher

R und $R^1$ die unter (1) angegebenen Bedeutungen haben und
$R^6$ für $C_1-C_4$-Alkyl steht,

verseift.

(5) neue 2-Phenyl-alken-1-yl-cyclopropancarbonsäurealkylester der Formel II b

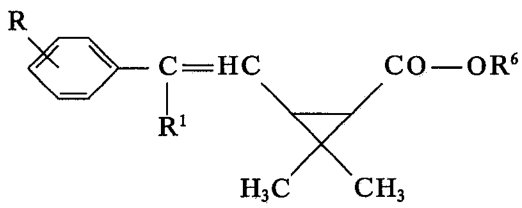

(IIb)

in welcher

R und $R^1$ die unter (1) angegebenen Bedeutungen haben und
$R^6$ für $C_1-C_4$-Alkyl steht.

(6) Verfahren zur Herstellung der 2-Phenyl-alken-1-yl-cyclopropan-carbonsäurealkylester der Formel (II b), dadurch gekennzeichnet, daß man

a) 1-Phenyl-alkan-phosphonsäureester der Formel V

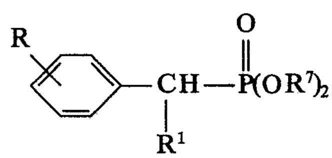

(V)

in welcher

R und $R^1$ die unter (1) angegebenen Bedeutungen haben und
$R^7$ für $C_1-C_4$-Alkyl, Phenyl oder $C_2-C_5$-Alkandiyl steht,

mit 2,2-Dimethyl-3-formyl-cyclopropan-1-carbonsäurealkylestern der Formel VI

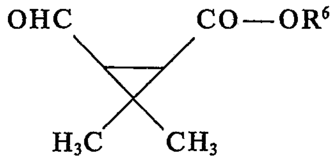

(VI)

in welcher

$R^6$ für $C_1-C_4$-Alkyl steht,

in Gegenwart einer Base und gegebenenfalls in Gegenwart eines Verdünnungsmittels bei Temperaturen zwischen 0 und 100°C umsetzt oder

b) Diene der Formel VII

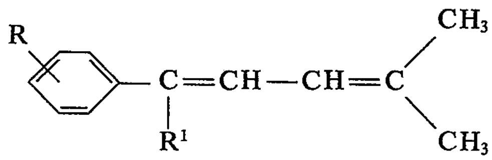

(VII)

in welcher

R und $R^1$ die unter (1) angegebenen Bedeutungen haben,

mit Diazoessigsäureestern der Formel VIII

$N_2CH-CO-OR^6$ (VIII)

in welcher

$R^6$ für $C_1-C_4$-Alkyl steht,

in Gegenwart eines Katalysators bei Temperaturen zwischen 50 und 200°C umsetzt.

(7) 1-Phenyl-alkanphosphorsäureester der Formel V sind neu:

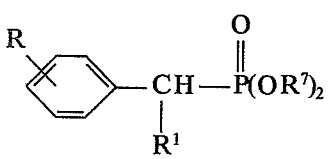

(V)

in welcher

R und $R^1$ die unter (1) angegebenen Bedeutungen haben und
$R^7$ für $C_1-C_4$-Alkyl, Phenyl oder $C_2-C_5$-Alkandiyl steht.

(8) 1-Phenyl-alkanphosphonsäureester der Formel V werden hergestellt, indem man Phosphorigsäureester der Formel IX

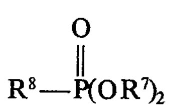

(IX)

in welcher

$R^7$ die oben angegebene Bedeutung hat und
$R^8$ für Wasserstoff oder $C_1-C_4$-Alkyl steht,

mit Halogen-1-phenyl-alkanen der Formel X

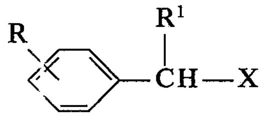

(X)

in welcher

R und $R^1$ die unter (1) angegebenen Bedeutungen haben und
X für Chlor, Brom oder Jod steht,

gegebenenfalls in Gegenwart einer Base und gegebenenfalls unter Verwendung eines Verdünnungsmittels zwischen 20 und 150°C umsetzt.

(9) Diene der Formel VII sind neu

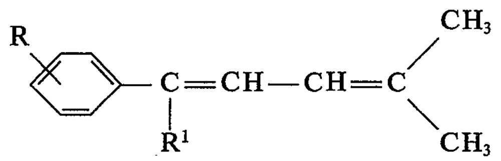

(VII)

in welcher

R und $R^1$ die unter (1) angegebenen Bedeutungen haben.

(10) Diene der Formel VII werden hergestellt, indem man Alkyl-phenyl-ketone der Formel XI

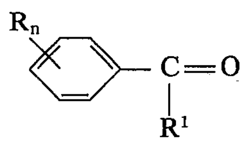

(XI)

in welcher

R und $R^1$ die unter (1) angegebenen Bedeutungen haben,

mit 3-Methyl-buten-2-yl-triphenyl-phosphoniumbromid der Formel XII

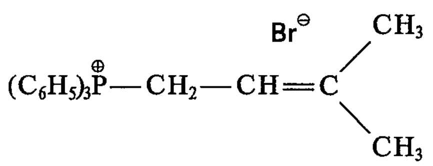

(XII)

in Gegenwart einer starken Base und gegebenenfalls unter Verwendung von Verdünnungsmitteln bei Temperaturen zwischen −70 und +100°C umsetzt.

Die neuen 2-Phenyl-alken-1-yl-cyclopropan-carbonsäureester der Formel I zeichnen sich durch hohe insektizide und akarizide Wirksamkeit aus.

Überraschenderweise zeigen die erfindungsgemäßen 2-Phenyl-alken-1-yl-cyclopropan-carbonsäureester eine erheblich höhere insektizide und akarizide Wirkung als aus dem Stand der Technik bekannte Verbindungen analoger Konstitution und gleicher Wirkungsrichtung.

Gegenstand der Erfindung sind vorzugsweise Verbindungen der Formel I, in welcher

R für Wasserstoff, für einen oder zwei Reste aus der Gruppe Fluor, Chlor, Brom steht,
$R^1$ für $C_{1-4}$-Alkyl oder für $C_1-C_2$-Fluor- oder Chlorfluor-alkyl steht, und
$R^2$ für den nachstehenden, in der Alkoholkomponente von Pyrethroiden üblichen Rest steht,

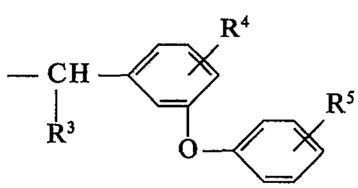

wobei

$R^3$ für Wasserstoff, Cyano, Ethinyl, Methyl oder Ethyl steht und
$R^4$ und $R^5$, welche gleich oder verschieden sein können, für Wasserstoff, Fluor, Chlor oder Brom stehen.

Die allgemeine Formel I schließt die verschiedenen möglichen Stereoisomeren und optisch aktiven Isomeren sowie deren Mischungen mit ein.

In einer bevorzugten Variante (a) von Verfahren (2) zur Herstellung der neuen Verbindungen der Formel I werden als reaktionsfähige Derivate der Carbonsäuren der Formel II die entsprechenden Carbonsäurechloride der Formel II a

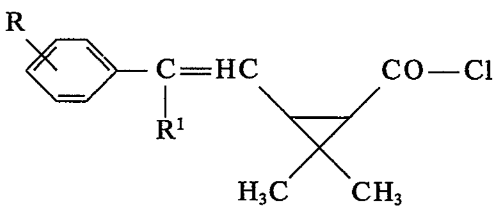

(IIa)

in welcher

R und $R^1$ die unter (1) angegebenen Bedeutungen haben,

mit Alkoholen der Formel III, in Gegenwart eines Säureakzeptors und unter Verwendung eines Verdünnungsmittels umgesetzt.

Eine besonders bevorzugte Variante (b) von Verfahren (2) zur Herstellung von Verbindungen der Formel I, in welcher $R^2$ für gegebenenfalls halogen-substituiertes 2-Phenoxy-$\alpha$-cyano-benzyl steht, ist dadurch gekennzeichnet, daß man Carbonsäurechloride der Formel II a mit gegebenenfalls halogensubstituierten 3-Phenoxy-benzaldehyden der Formel IV

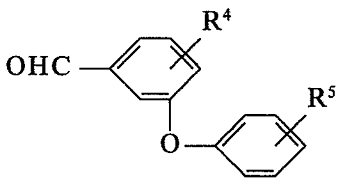

(IV)

in welcher

$R^4$ und $R^5$ die oben angegebenen Bedeutungen haben,

und wenigstens der äquimolaren Menge Alkalicyanid (vorzugsweise Natriumcyanid oder Kaliumcyanid), gegebenenfalls in Gegenwart eines Katalysators und unter Verwendung von Verdünnungsmitteln umsetzt.

Verwendet man als Ausgangsstoffe bei der Verfahrensvariante (a) beispielsweise 3-(2-(4-Fluor-phenyl)-3,3,3-trifluor-propen-1-yl)-2,2-dimethyl-cyclopropan-1-carbonsäurechlorid und 3-Phenoxy-benzylalkohol, und bei Variante (b) 3-(2-(4-Methoxy-phenyl)-penten-1-yl)-2,2-dimethyl-cyclopropan-1-carbonsäurechlorid, Natriumcyanid und 4-Fluor-3-phenoxy-benzaldehyd, so können die entsprechenden Reaktionen durch folgende Formelschemata skizziert werden:

(a)

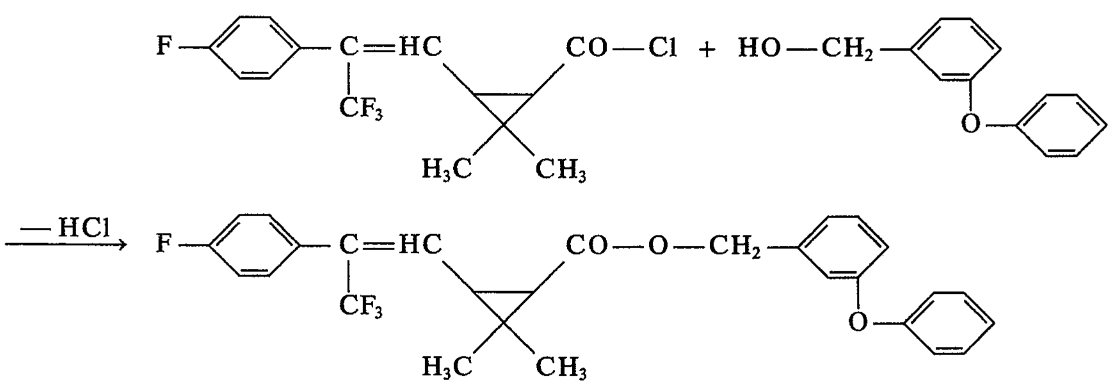

(b) 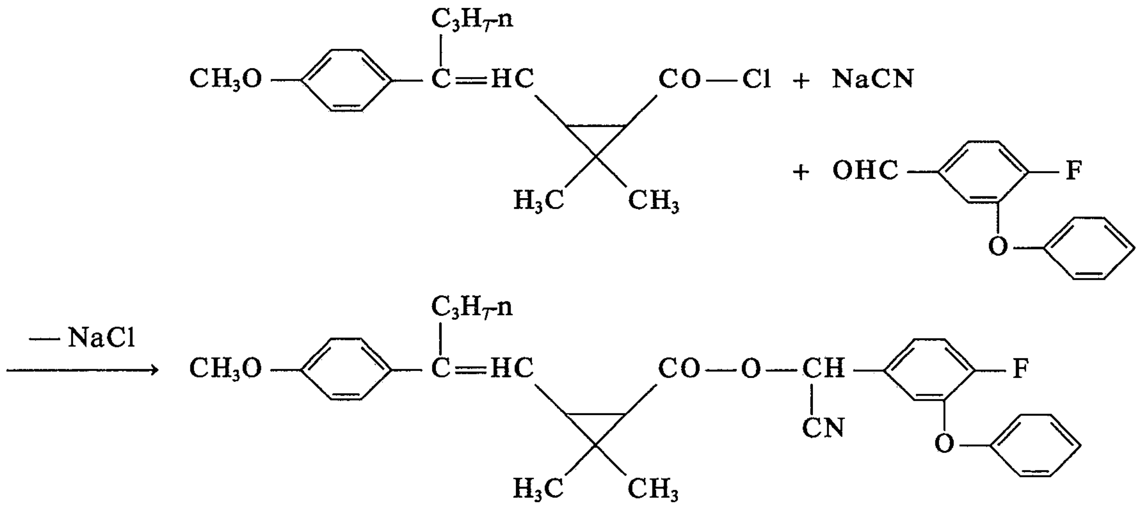


Die Ausgangsstoffe für die Herstellung der erfindungsgemäßen Verbindungen der Formel I sind durch die Formeln II, II a, III und IV definiert. Vorzugsweise stehen darin die Reste R bis $R^5$ für diejenigen Reste, welche bei der Definition der Reste R bis $R^5$ in Formel I als bevorzugt genannt wurden.

Die als Ausgangsverbindungen zu verwendenden 2-Phenyl-alken-1-yl-cyclopropan-carbonsäuren (II) bzw. die entsprechenden Säurechloride (II a) als deren reaktionsfähige Derivate sind neu.

Carbonsäurechloride der Formel II a können aus den entsprechenden Carbonsäuren der Formel II nach üblichen Methoden, beispielsweise durch Umsetzung mit einem Chlorierungsmittel wie z. B. Thionylchlorid, gegebenenfalls unter Verwendung eines Verdünnungsmittels wie z. B. Tetrachlorkohlenstoff, bei Temperaturen zwischen 10 und 100°C hergestellt werden.

Carbonsäuren der Formel II erhält man aus den entsprechenden Alkylestern der Formel II b

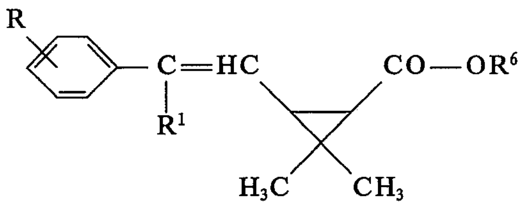

(IIb)

in welcher

R und $R^1$ die unter (1) angegebenen Bedeutungen haben und
$R^6$ für $C_1-C_4$-Alkyl steht,

nach üblichen Verseifungsmethoden, beispielsweise durch mehrstündiges Erhitzen mit wäßrig-alkoholischer Natronlauge auf Temperaturen zwischen 50 und 150°C. Die Aufarbeitung erfolgt nach üblichen Methoden, beispielsweise durch Abdestillieren des Alkohols, Verdünnen mit Wasser, Ansäuern, Extrahieren mit Methylenchlorid, Trocknen der organischen Extrakte und Abdestillieren des Lösungsmittels.

Als Beispiele für die Carbonsäuren der Formel II, die entsprechenden Säurechloride II a und Ester II b seien genannt:

3-(2-Phenyl-propen-1-yl)-, 3-(2-Phenyl-buten-1-yl),
3-(2-Phenyl-3,3,3-trifluor-propen-1-yl)-, 3-(2-(4-Fluor-phenyl)-propen-1-yl)-,
3-(2-(4-Fluor-phenyl)-buten-1-yl)-, 3-(2-(4-Fluor-phenyl)-3,3,3-trifluor-propen-1-yl)-,
3-(2-(3-Chlor-phenyl)-propen-1-yl), 3-(2-(4-Chlor-phenyl)-propen-1-yl)-,
3-(2-(4-Chlor-phenyl)-buten-1-yl)-, 3-(2-(4-Chlor-phenyl)-3,3,3-trifluor-propen-1-yl)-,
-2,2-dimethyl-cyclopropan-1-carbonsäure sowie die entsprechenden Säurechloride, die Methylester und Ethylester.

2-Phenyl-alken-1-yl-cyclopropancarbonsäure-alkylester der Formel II b sind, wie die entsprechenden Säuren (II) und Säurechloride (II a) noch nicht in der Literatur beschrieben.

Man erhält 2-Phenyl-alken-1-yl-cyclopropan-carbonsäureester der Formel II b

(a) durch Umsetzung von 1-Phenyl-alkan-phosphonsäureestern der Formel V

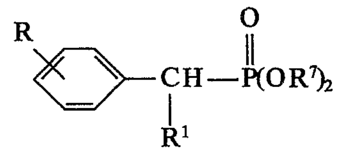

(V)

in welcher

R und $R^1$ die unter (1) angegebenen Bedeutungen haben und
$R^7$ für $C_1-C_4$-Alkyl, Phenyl oder $C_2-C_5$-Alkandiyl steht,

mit 2,2-Dimethyl-3-formyl-cyclopropan-1-carbonsäurealkylestern der Formel VI

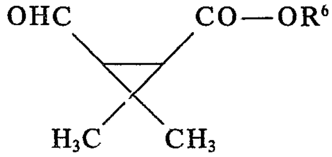

(VI)

in welcher

$R^6$ für $C_1-C_4$-Alkyl steht,

in Gegenwart einer Base, wie z. B. Kalium-tert.-butylat, und gegebenenfalls in Gegenwart eines Verdünnungsmittels, wie z. B. Tetrahydrofuran, bei Temperaturen zwischen 0 und 100°C, vorzugsweise zwischen 10 und 80°C. Die Aufarbeitung kann auf übliche Weise durchgeführt werden, beispielsweise, indem man mit Wasser verdünnt, mit Methylenchlorid extrahiert, die organische Phase trocknet, das Lösungsmittel abzieht und das zurückbleibende Produkt durch Vakuumdestillation reinigt.

Ester der Formel II b erhält man auch

(b) durch Umsetzung von Dienen der Formel VII

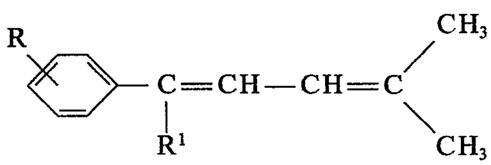

(VII)

in welcher

R und $R^1$ die unter (1) angegebenen Bedeutungen haben,

mit Diazoessigsäureestern der Formel VIII

$$N_2CH—CO—OR^6 \qquad (VIII)$$

in welcher

$R^6$ für $C_1-C_4$-Alkyl steht,

in Gegenwart eines Katalysators, wie z. B. Kupferpulver und Kupfersulfat, bei Temperaturen zwischen 50 und 200°C, vorzugsweise zwischen 80 und 150°C.

Zur Aufarbeitung wird mit Methylenchlorid verdünnt und filtriert. Vom Filtrat wird nach Waschen mit Wasser und Trocknen das Lösungsmittel abgezogen und das zurückbleibende Rohprodukt gegebenenfalls durch Vakuumdestillation gereinigt.

Die als Zwischenprodukte zu verwendenden 1-Phenyl-alkan-phosphonsäureester sind durch Formel V definiert. Vorzugsweise stehen darin R und $R^1$ für diejenigen Reste, welche bei der Definition der Reste R und $R^1$ in Formel I als bevorzugt genannt wurden, und $R^7$ steht für Methyl, Ethyl, Phenyl oder beide Reste $R^7$ stehen zusammen für 2,2-Dimethyl-propan-1,3-diyl.

Als Beispiele seien genannt:

1-Phenyl-, 1-(4-Fluor-phenyl)-, 1-(3-Chlor-phenyl)-,
1-(4-Chlor-phenyl)-ethan-phosphonsäure-dimethylester und -diethylester;
1-Phenyl-, 1-(4-Fluor-phenyl)-, 1-(3-Chlor-phenyl)-,
1-(4-Chlor-phenyl)-propan-phosphonsäure-dimethylester und -diethylester.

Man erhält die neuen 1-Phenyl-alkan-phosphonsäureester der Formel V nach an sich bekannten Verfahren, beispielsweise durch Umsetzung von Phosphorigsäureestern der Formel IX

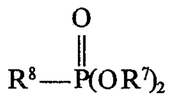

(IX)

in welcher

$R^7$ die oben angegebene Bedeutung hat und
$R^8$ für Wasserstoff oder $C_1-C_4$-Alkyl steht,

mit 1-Halogen-1-phenyl-alkanen der Formel X

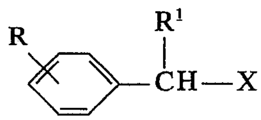

(X)

in welcher

R und $R^1$ die unter (1) angegebenen Bedeutungen haben und
X für Chlor, Brom oder Jod steht,

gegebenenfalls in Gegenwart einer Base, wie z. B. Natriummethylat, und gegebenenfalls unter Verwendung eines Verdünnungsmittels, wie z. B. Methanol, bei Temperaturen zwischen 20 und 150°C.

Ausgangsverbindungen der Formeln IX und X sind bekannt.

Die weiter als Zwischenprodukte zu verwendenden 2,2-Dimethyl-3-formyl-cyclopropan-1-carbonsäureester der Formel VI sind bekannt (vergleiche DE-OS 2 615 160). Als Beispiele seien 2,2-Dimethyl-3-formyl-cyclopropan-1-carbonsäure-methylester und -ethylester genannt.

Die weiter als Zwischenprodukte zu verwendenden Diene sind durch Formel VII definiert. Vorzugsweise stehen darin R und $R^1$ für diejenigen Reste, welche bei der Definition der Reste R und $R^1$ in Formel I als bevorzugt genannt wurden.

Als Beispiele seien genannt:

2-Phenyl-, 2-(4-Fluor-phenyl)-, 2-(3-Chlor-phenyl)-,
2-(4-Chlor-phenyl)-1,1,1-trifluor-5-methyl-hexa-2,4-dien.

Man erhält die neuen Diene der Formel VII nach an sich bekannten Verfahren, beispielsweise durch Umsetzung von Alkyl-phenyl-ketonen der Formel XI

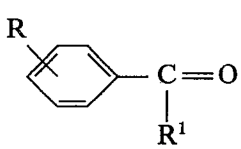

(XI)

in welcher
R und $R^1$ die unter (1) angegebenen Bedeutungen haben,

mit 3-Methyl-buten-2-yl-triphenyl-phosphoniumbromid der Formel XII

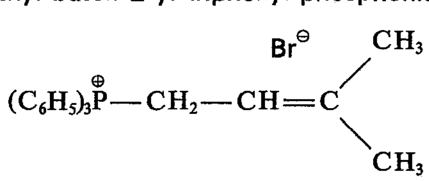

(XII)

in Gegenwart einer starken Base, wie z. B. Butyllithium und gegebenenfalls unter Verwendung von Verdünnungsmitteln wie z. B. Tetrahydrofuran und Hexan, bei Temperaturen zwischen −70 und +100°C, vorzugsweise zwischen −20 und +50°C. Zur Aufarbeitung wird mit Wasser verdünnt und mit einem mit

Wasser nicht mischbaren Lösungsmittel, wie z. B. Petroläther mehrfach extrahiert. Von den vereinigten Extrakten wird nach Trocknen des Lösungsmittels abgezogen und das im Rückstand verbleibende Rohprodukt wird gegebenenfalls durch Vakuumdestillation gereinigt.

Ausgangsverbindungen der Formeln XI und XII sind bekannt.

Alkohole der Formel III bzw. Aldehyde der Formel IV als davon abzuleitende Verbindungen, welche bei dem oben unter (2) angegebenen Verfahren zur Herstellung der neuen 2-Phenyl-alken-1-yl-cyclopropan-carbonsäureester der Formel I als Reaktionskomponenten verwendet werden, sind bekannt (vergleiche DE-OS 2 005 489, 2 326 077, 2 709 264; GB-PS 1 078 511).

Vorzugsweise haben bei den Ausgangsverbindungen der Formel III bzw. der Formel IV die Reste $R^2$ und/oder $R^3$, $R^4$ und $R^5$ die bei der Definition der Reste $R^2$, $R^3$, $R^4$ und $R^5$ in Formel I als bevorzugt angegebenen Bedeutungen.

Als Beispiele seien genannt:

3-Phenoxy-benzylalkohol, 3-phenoxy-benzaldehyd, 3-(3-Fluoro-phenoxy)-, 3-(4-Fluoro-phenoxy)-, 3-Phenoxy-4-fluoro-, 3-(3-Fluoro-phenoxy)-4-fluoro- und 3-(4-Fluoro-phenoxy-4-fluoro-benzylalkohol, 3-(3-Fluoro-phenoxy)-, 3-(4-Fluoro-phenoxy)-, 3-Phenoxy-4-fluoro-, 3-(3-Fluoro-phenoxy)-4-fluoro- und 3-(4-Fluoro-phenoxy)-4-fluoro-$\alpha$-cyano-benzylalkohol, 3-(3-Fluoro-phenoxy)-, 3-(4-Fluoro-phenoxy)-, 3-Phenoxy-4-fluoro-, 3-(3-Fluoro-phenoxy)-4-fluoro- und 3-(4-Fluoro-phenoxy)-4-fluoro-$\alpha$-äthinyl-benzylalkohol, 3-Phenoxy-4-fluoro-$\alpha$-methyl-benzylalkohol sowie 3-(3-Fluoro-phenoxy)-, 3-(4-Fluoro-phenoxy)-, 3-Phenoxy-4-fluoro-, 3-(3-Fluoro-phenoxy)-4-fluoro- und 3-(4-Fluoro-phenoxy)-4-fluoro-benzaldehyd.

Das unter (2) angegebene Verfahren zur Herstellung der neuen 2-Phenyl-alken-1-yl-cyclopropancarbonsäureester der Formel I wird in allen Varianten bevorzugt unter Verwendung geeigneter Lösungs- oder Verdünnungsmittel durchgeführt. Als solche kommen praktisch alle inerten organischen Solventien infrage. Hierzu gehören insbesondere aliphatische und aromatische, gegebenenfalls chlorierte Kohlenwasserstoffe, wie Pentan, Hexan, Heptan, Benzol, Toluol, Xylol, Methylenchlorid, Chloroform, Tetrachlorkohlenstoff, Chlorbenzol und o-Dichlorbenzol, Ether wie Diethyl- und Dibutylether, Tetrahydrofuran und Dioxan, Ketone wie Aceton, Methylethyl-, Methyl-isopropyl- und Methylisobutylketon sowie Nitrile wie Acetonitril und Propionitril.

Beim Arbeiten im Zweiphasenmedium wird Wasser als zweite Solvenskomponente verwendet.

Bei der Variante (a) des unter (2) beschriebenen Herstellungsverfahrens können als Säureakzeptoren alle üblichen Säurebindemittel Verwendung finden.

Besonders bewährt haben sich Alkalicarbonate und -alkoholate, wie Natrium- und Kaliumcarbonat, Natrium- und Kaliummethylat bzw. -äthylat, ferner aliphatische, aromatische oder heterocyclische Amine, beispielsweise Triethylamin, Trimethylamin, Dimethylanilin, Dimethylbenzylamin und Pyridin.

Bei der Variante (b) von Verfahren (2) werden als Katalysatoren Verbindungen verwendet, welche gewöhnlich bei Reaktionen in mehrphasigen Medien als Hilfsmittel zum Phasentransfer von Reaktanden dienen. Insbesondere seien Tetraalkyl- und Trialkylaralkyl-ammoniumsalze wie z. B. Tetrabutylammoniumbromid und Trimethyl-benzylammoniumchlorid genannt.

Die Reaktionstemperatur kann innerhalb eines größeren Bereichs variiert werden. Im allgemeinen arbeitet man zwischen 0 und 100°C, bei Verfahrensvariante (a) vorzugsweise zwischen 10 und 50°C, bei Variante (b) vorzugsweise zwischen 10 und 30°C.

Alle Varianten des erfindungsgemäßen Verfahrens werden im allgemeinen bei Normaldruck durchgeführt.

Zur Durchführung des erfindungsgemäßen Verfahrens (2) werden die Ausgangsstoffe gewöhnlich in äquimolaren Mengen eingesetzt. Ein Überschuß der einen oder anderen Reaktionskomponente bringt keine wesentlichen Vorteile. Die Umsetzung wird im allgemeinen in einem oder mehreren Verdünnungsmitteln in Gegenwart eines Säureakzeptors oder eines Katalysators durchgeführt und das Reaktionsgemisch wird mehrere Stunden bei der erforderlichen Temperatur gerührt. Anschließend wird das Reaktionsgemisch mit Toluol/Wasser geschüttelt, die organische Phase abgetrennt, mit Wasser gewaschen und getrocknet.

Nach Abdestillieren des Lösungsmittels im Vakuum fallen im allgemeinen die neuen Verbindungen in Form von Ölen an, die sich zum Teil nicht unzersetzt destillieren lassen, jedoch durch sogenanntes »Andestillieren«, d. h. durch längeres Erhitzen unter vermindertem Druck auf mäßig erhöhte Temperaturen von den letzten flüchtigen Anteilen befreit und auf diese Weise gereinigt werden. Zu ihrer Charakterisierung dient der Brechungsindex.

Die neuen 2-Phenyl-alken-1-yl-cyclopropan-carbonsäureester (I) zeichnen sich, wie bereits erwähnt, durch hohe insektizide und akarizide Wirksamkeit aus. Sie können gegen pflanzenschädigende Insekten und Milben in Land- und Forstwirtschaft, im Vorratsschutz und Hygienebereich sowie gegen Ektoparasiten im veterinär-medizinischen Bereich eingesetzt werden.

Die Wirkstoffe eignen sich bei guter Pflanzenverträglichkeit und günstiger Warmblütertoxizität zur Bekämpfung von tierischen Schädlingen, insbesondere Insekten, Spinnentieren, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z. B. Oniscus asellus, Armadillidium vulgare, Porcellio scaber.
Aus der Ordnung der Diplopoda z. B. Blaniulus guttulatus.
Aus der Ordnung der Chilopoda z. B. Geophilus carpophagus, Scutigera spec.
Aus der Ordnung der Symphyla z. B. Scutigerella immaculata.
Aus der Ordnung der Thysanura z. B. Lepisma saccharina.
Aus der Ordnung der Collembola z. B. Onychiurus armatus.
Aus der Ordnung der Orthoptera z. B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.
Aus der Ordnung der Dermaptera z. B. Forficula auricularia.
Aus der Ordnung der Isoptera z. B. Reticulitermes spp.
Aus der Ordnung der Anoplura z. B. Phylloxera vastatrix, Pemphigus spp., Pediculus humanus corporis, Haematopinus spp., Linognathus spp.
Aus der Ordnung der Mallophaga z. B. Trichodectes spp., Damalinea spp.
Aus der Ordnung der Thysanoptera z. B. Hercinothrips femoralis, Thrips tabaci.
Aus der Ordnung der Heteroptera z. B. Eurygaster spp., Dysdercus intermedius, Piesma quadrata, Cimex lectularius, Rhodnius prolixus, Triatoma spp.
Aus der Ordnung der Homoptera z. B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus heterae, Pseudococcus spp. Psylla spp.
Aus der Ordnung der Lepidoptera z. B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp. Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Cacoecia podana, Capua reticulana, Choristoneura fumiferana, Clysia ambiguella, Homona magnanima, Tortrix viridana.
Aus der Ordnung der Coleoptera z. B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.
Aus der Ordnung der Hymenoptera z. B. Diprion spp., Hoplocampa spp., Lasius spp., Monomorium pharaonis, Vespa spp.
Aus der Ordnung der Diptera z. B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.
Aus der Ordnung der Siphonaptera z. B. Xenopsylla cheopis, Ceratophyllus spp.
Aus der Ordnung der Arachnida z. B. Scorpio maurus, Latrodectus mactans.
Aus der Ordnung der Acarina z. B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u. ä., sowie ULV-Kalt- und Warmnebel-Formulierungen.

Diese Formulierungen werden in bekannter Weise hergestellt, z. B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z. B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z. B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z. B. Aerosol-Treibgas, wie Halogenkohlenwasserstoffe sowie Butan, Propan, Stickstoff und Kohlendioxid; als feste Trägerstoffe kommen in Frage: z. B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z. B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z. B. nichtionogene und anionische Emulgatoren, wie Polyoxyäthylen-Fettsäure-Ester, Polyoxyäthylen-Fettalkohol-Äther, z. B. Alkylarylpolyglykol-äther, Alkylsulfonate, Alkylsulfate, Arylsulfonate sowie Eiweißhydrolysate; als Dispergiermittel kommen in Frage: z. B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z. B. Eisenoxid, Titanoxid, Ferrocyanblau und organische Farbstoffe, wie Alizarin-, Azol-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90%.

Die Anwendung der erfindungsgemäßen Wirkstoffe erfolgt in Form ihrer handelsüblichen Formulierungen und/oder den aus diesen Formulierungen bereiteten Anwendungsformen.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 100 Gew.-% Wirkstoff, vorzugsweise zwischen 0,01 und 10 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Die erfindungsgemäßen Wirkstoffe eignen sich auch zur Bekämpfung von Ekto- und Endoparasiten auf dem veterinärmedizinischen Gebiet.

Die Anwendung der erfindungsgemäßen Wirkstoffe geschieht im Veterinärsektor in bekannter Weise, wie durch orale Anwendung in Form von beispielsweise Tabletten, Kapseln, Tränken, Granulaten, durch dermale Anwendung in Form beispielsweise des Tauchens (Dippen), Sprühens (Sprayen), Aufgießens (pour-on and spot-on) und des Einpuderns sowie durch parenterale Anwendung in Form beispielsweise der Injektion.

## Beispiel A

### Phaedon-Larven-Test

Lösungsmittel: 3 Gewichtsteile Aceton
Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Meerrettichblattkäfer-Larven (Phaedon cochleariae) besetzt, solange

die Blätter noch feucht sind.

Nach der gewünschten Zeit wird die Abtötung in % bestimmt. Dabei bedeutet 100 %, daß alle Käfer-Larven abgetötet wurden; 0 % bedeutet, daß keine Käfer-Larven abgetötet wurden.

Bei diesem Test zeigen z. B. die folgenden Verbindungen der Herstellungsbeispiele überlegene Wirksamkeit gegenüber dem Stand der Technik: 9, 8, 3, 1.

Beispiel B

Myzus-Test

Lösungsmittel: 3 Gewichtsteile Aceton
Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea), die stark von der Pfirsichblattlaus (Myzus persicae) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, daß alle Blattläuse abgetötet wurden; 0 % bedeutet, daß keine Blattläuse abgetötet wurden.

Bei diesem Test zeigen z. B. die folgenden Verbindungen der Herstellungsbeispiele überlegene Wirksamkeit gegenüber dem Stand der Technik: 4, 6, 2, 3.

Beispiel C

Tetranychus-Test (resistent)

Lösungsmittel: 3 Gewichtsteile Aceton
Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Bohnenpflanzen (Phaseolus vulgaris), die stark von allen Entwicklungsstadien der gemeinen Spinnmilbe oder Bohnenspinnmilbe (Tetranychus urticae) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, daß alle Spinnmilben abgetötet wurden; 0 % bedeutet, daß keine Spinnmilben abgetötet wurden.

Bei diesem Test zeigen z. B. die folgenden Verbindungen der Herstellungsbeispiele überlegene Wirksamkeit gegenüber dem Stand der Technik: 4, 9, 8, 6, 2, 3, 1, 5.

Beispiel D

Grenzkonzentrations-Test/Bodeninsekten

Testinsekt: Phorbia antiqua-Maden im Boden
Lösungsmittel: 3 Gewichtsteile Aceton
Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.

Bei diesem Test zeigen z. B. die folgenden Verbindungen der Herstellungsbeispiele überlegene Wirksamkeit gegenüber dem Stand der Technik: 1, 4, 8, 9.

Beispiel E

Grenzkonzentrations-Test/Bodeninsekten

Testinsekt: Agrotis segetum-Larven im Boden
Lösungsmittel: 3 Gewichtsteile Aceton
Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100%, wenn alle Testinsekten abgetötet worden sind, er ist 0%, wenn noch genau so viele Testinsekten leben wie bei der unbehandelten Kontrolle.

Bei diesem Test zeigen z. B. die folgenden Verbindungen der Herstellungsbeispiele überlegene Wirksamkeit gegenüber dem Stand der Technik: 3, 4, 8.

Beispiel

Test mit Lucilia cuprina res.-Larven

Emulgator: 35 Gewichtsteile Ethylenglykolmonomethylether
35 Gewichtsteile Nonylphenolpolyglykolether

Zur Herstellung einer zweckmäßigen Wirkstoffzubereitung vermischt man drei Gewichtsteile Wirkstoff mit sieben Gewichtsteilen des oben angegebenen Lösungsmittel-Gemisches und verdünnt das so erhaltene Konzentrat mit Wasser auf die jeweils gewünschte Konzentration.

Etwa 20 Lucilia cuprina res.-Larven werden in ein Teströhrchen gebracht, welches ca. 1 $cm^2$ Pferdefleisch und 0,5 ml der Wirkstoffzubereitung enthält. Nach 24 Stunden wird der Abtötungsgrad bestimmt.

Bei diesem Test zeigen z. B. die folgenden Verbindungen der Herstellungsbeispiele überlegene Wirkung gegenüber dem Stand der Technik: 3, 4, 6, 7, 8, 9, 1.

Beispiel

Test mit Boophilus microplus resistent

Lösungsmittel: 35 Gewichtsteile Ethylenglykolmonomethylether
35 Gewichtsteile Nonylphenolpolyglykolether

Zur Herstellung einer zweckmäßigen Wirkstoffzubereitung vermischt man drei Gewichtsteile Wirkstoff mit sieben Gewichtsteilen des oben angegebenen Lösungsmittel-Gemisches und verdünnt das so erhaltene Konzentrat mit Wasser auf die gewünschte Konzentration.

10 adulte Boophilus microplus res. werden in die zu testende Wirkstoffzubereitung 1 Minute getaucht. Nach Überführung in Plastikbecher und Aufbewahrung in einem klimatisierten Raum wird der Abtötungsgrad bestimmt.

Bei diesem Test zeigen z. B. die folgenden Verbindungen der Herstellungsbeispiele überlegene Wirkung gegenüber dem Stand der Technik: 1 bis 9.

Herstellungsbeispiele

Beispiel 1

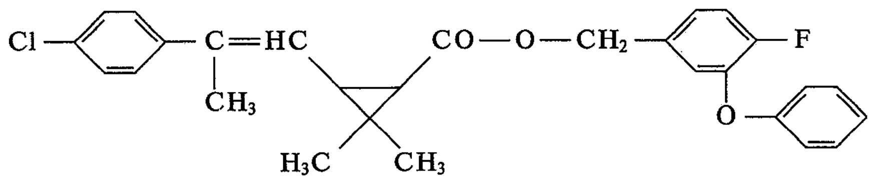

5,4 g (0,025 Mol) 3-Phenoxy-4-fluor-benzylalkohol und 7 g (0,025 Mol) 2,2-Dimethyl-3-(2-methyl-2-(4-chlorphenyl)-vinyl)-cyclopropancarbonsäurechlorid werden in 100 ml wasserfreiem Toluol gelöst und bei 20–25°C 2,5 g Pyridin, gelöst in 50 ml wasserfreiem Toluol, unter Rühren zugetropft. Anschließend wird weitere 3 Stunden bei 25–35°C gerührt. Das Reaktionsgemisch wird in 150 ml Wasser, dem 5 ml konzentrierte Salzsäure zugesetzt werden, gegossen, die organische Phase abgetrennt und nochmals mit 100 ml Wasser gewaschen. Anschließend wird die Toluolphase über Natriumsulfat getrocknet und das Lösungsmittel im Wasserstrahlvakuum abdestilliert. Letzte Lösungsmittelreste werden durch kurzes Andestillieren bei 60°C/l Torr Badtemperatur entfernt. Man erhält 8,7 g (74,9 % der Theorie) 2,2-Dimethyl-3-(2-methyl-2-(4-chlor-phenyl)-vinyl)-cyclopropan-carbonsäure-(3-phenoxy-4-fluor-benzyl)-ester als gelbes zähes Öl mit dem Brechungsindex $n_D^{23}$ : 1,5735.

Beispiel 2

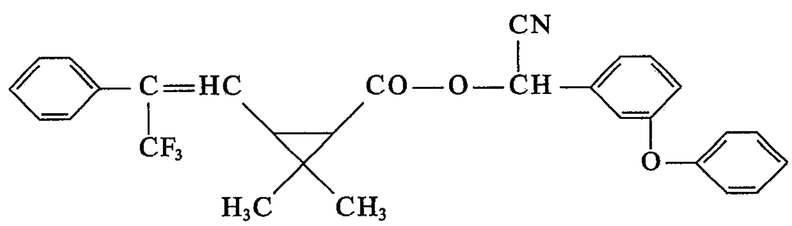

4,6 g (0,0232 Mol) 3-Phenoxy-benzaldehyd und 7 g (0,0232 Mol) 2,2-Dimethyl-3-(2-trifluormethyl-2-phenyl-vinyl)-cyclopropancarbonsäurechlorid werden zusammen unter Rühren bei 20–25°C zu einer Mischung von 1,8 g Natriumcyanid, 2,7 ml Wasser, 100 ml n-Hexan und 0,5 g Tetrabutylammoniumbromid getropft und dann 4 Stunden bei 20–25°C gerührt. Anschließend wird die Reaktionsmischung mit 300 ml Toluol versetzt und 2mal mit je 300 ml Wasser ausgeschüttelt. Die organische Phase wird abgetrennt, über Magnesiumsulfat getrocknet und das Lösungsmittel im Wasserstrahlvakuum abdestilliert. Letzte Lösungsmittelreste werden durch kurzes Andestillieren bei 60°C/1 Torr Badtemperatur entfernt. Man erhält 8,1 g (71,1 % der Theorie) 2,2-Dimethyl-3-(2-trifluormethyl-2-phenylvinyl)-cyclopropancarbonsäure-($\alpha$-cyano-3-phenoxy-benzyl)-ester als zähes Öl. Die Struktur wird durch das $^1$H-NMR-Spektrum bestätigt.

$^1$H-NMR-Spektrum ($CDCl_3$/TMS)
aromatische-H: 2,3–3,17 $\tau$ (m/14 H), vinyl-H: 3,17–3,5 und 3,78–4,07 $\tau$ (m/1 H), benzyl-H: 3,6–3,75 $\tau$ (m/1 H), cyclopropan-H: 7,67–8,38 $\tau$ (m/2 H) und dimethyl-H: 8,5–9,0 $\tau$ (m/6 H).

Analog Beispiel 1 oder 2 können folgende Verbindungen hergestellt werden:

(3) 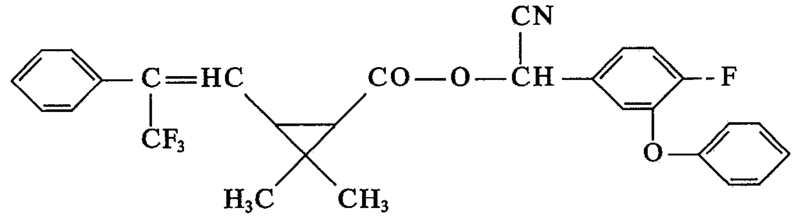

$^1$H-NMR:
vinyl-H: 3,17–3,5 $\tau$
und
3,78–4,07 $\tau$ (m/1 H)
benzyl-H: 3,6–3,75 $\tau$
(m/1 H)

(4) 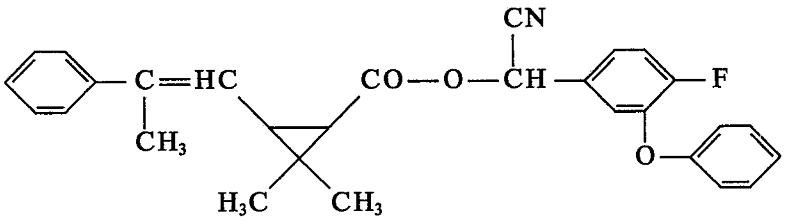

$^1$H-NMR:
vinyl-H: 4,3–4,9 τ (m/1 H)
benzyl-H: 3,55–3,8 τ (m/1 H)
methyl-H: 7,8–7,9 τ (m/3 H)

(6) 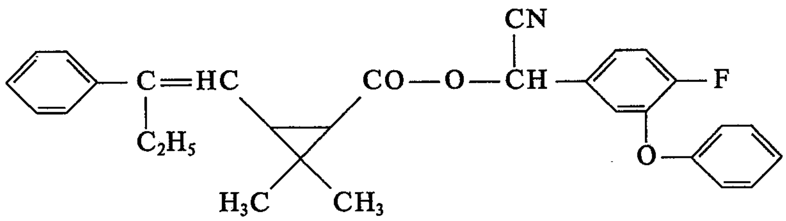

$^1$H-NMR:
vinyl-H: 4,5–4,8 τ (m/1 H)
benzyl-H: 3,6–3,8 τ (m/1 H)
ethyl-H: 5,7–6,5 τ (m/2 H)

(7) 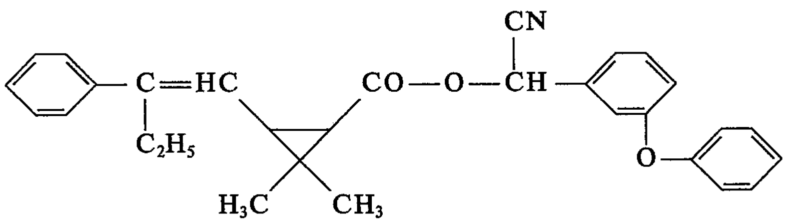

$^1$H-NMR:
vinyl-H: 4,5–4,78 τ (m/1 H)
benzyl-H: 3,58–3,76 τ (m/1 H)
ethyl-H: 5,7–6,5 τ (m/2 H)

(8) 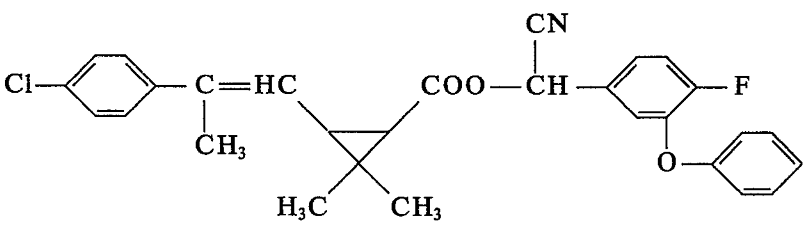

zähes Öl

(9) 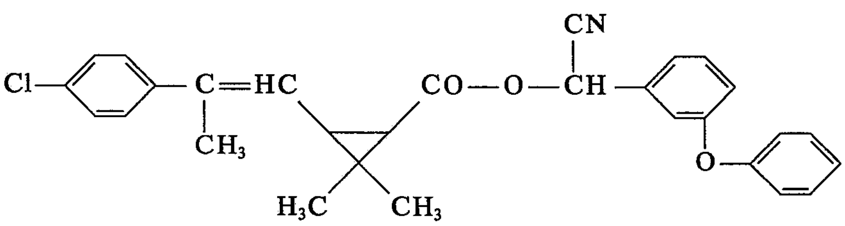

zähes Öl

(11) 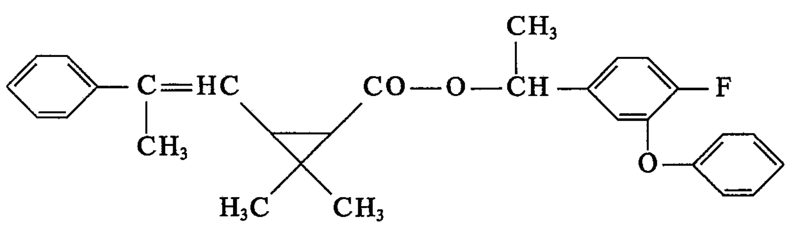

(12) 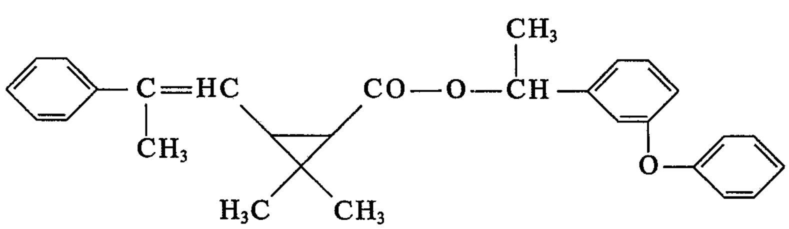

(13) 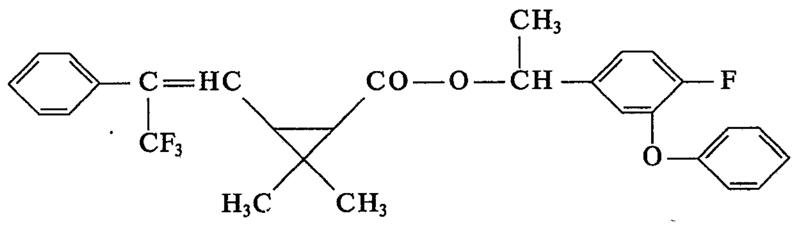

(14) 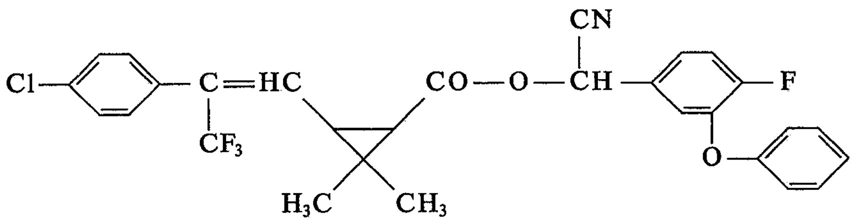

(15) 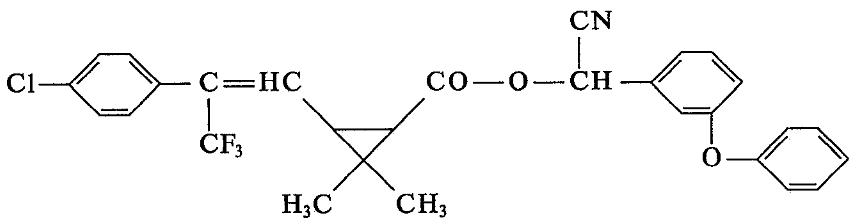

(16) 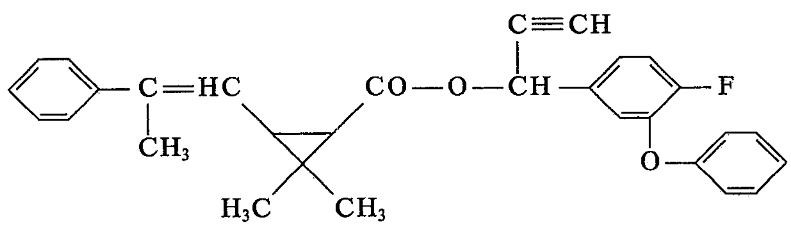

(17) 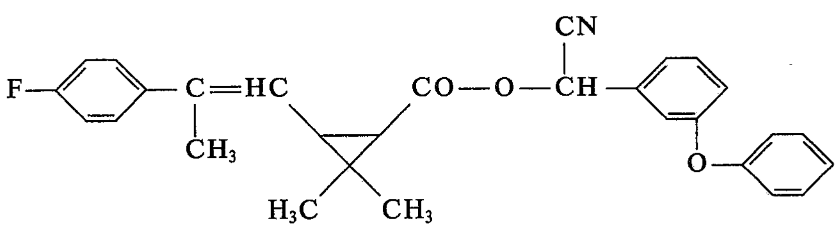

(18) 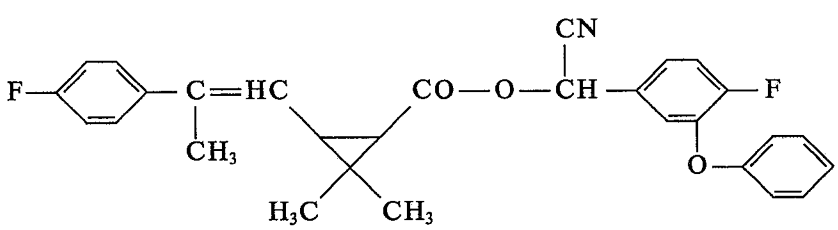

(19) 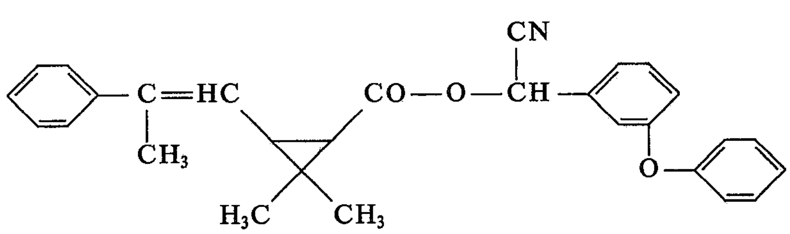

Beispiele zur Herstellung von Ausgangsverbindungen

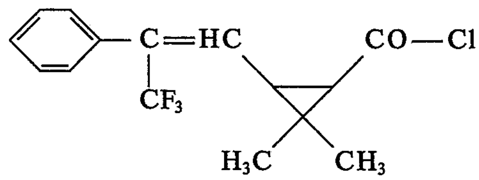

7,1 g (0,025 Mol) 2,2-Dimethyl-3-(2-trifluormethyl-2-phenyl-vinyl)-cyclopropancarbonsäure werden in 100 ml Tetrachlorkohlenstoff gelöst und bei 25°C langsam unter Rühren 9 g Thionylchlorid zugetropft. Anschließend wird 4 Stunden zum Rückfluß erhitzt. Nach beendeter Reaktionszeit werden überschüssiges Thionylchlorid sowie Tetrachlorkohlenstoff im Wasserstrahlvakuum abdestilliert. Das verbleibende Öl wird durch kurzes Andestillieren bei 40°C/2 Torr Badtemperatur von letzten Lösungsmittelresten befreit. Man erhält 7 g (92,7 % der Theorie) 2,2-Dimethyl-3-(2-trifluormethyl-2-phenyl-vinyl)-cyclopropancarbonsäurechlorid. Die Struktur wird durch das $^1$H-NMR-Spektrum bestätigt.

$^1$H-NMR-Spektrum ($CDCl_3$/T 11 $\tau$):
aromatische-H: 2,4–2,9 $\tau$ (m/5 H), vinyl-H: 3,28–3,6 und 3,76–4,05 $\tau$ (m/1 H), cyclopropan-H: 7,5–8,33 $\tau$ (m/2 H) und dimethyl-H: 8,5–8,9 $\tau$ (m/6 H).

Analog erhält man:

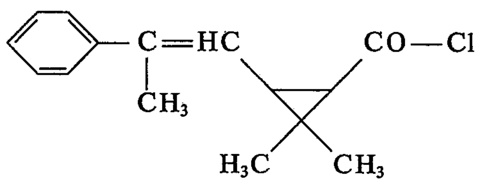

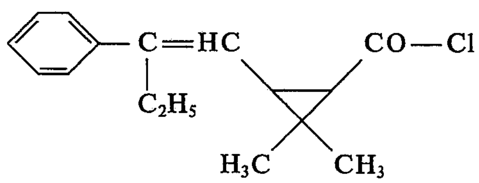

Siedepunkt: 141–145°C/2 Torr

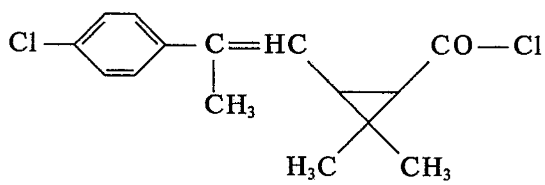

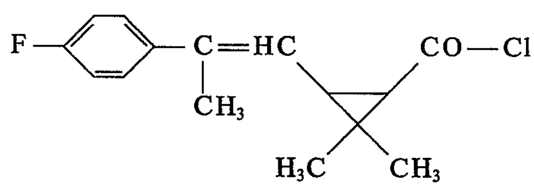

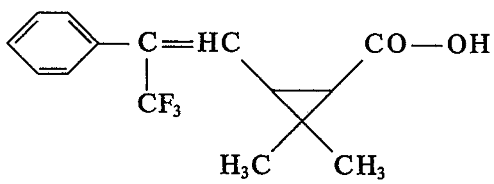

21 g (0,067 Mol) 2,2-Dimethyl-3-(2-trifluormethyl-2-phenyl-vinyl)-cyclopropancarbonsäureethylester werden in 100 ml Äthanol gelöst, dann mit einer Lösung von 3,1 g Natriumhydroxid in 75 ml Wasser versetzt und 4 Stunden unter Rühren zum Rückfluß erhitzt. Anschließend wird das Äthanol im Wasserstrahlvakuum abdestilliert, der Rückstand in 300 ml Wasser aufgenommen und 1 mal mit 300 ml Methylenchlorid extrahiert. Die wäßrige Phase wird abgetrennt, mit konzentrierter Salzsäure

angesäuert und anschließend mit 2mal 300 ml Methylenchlorid extrahiert. Die organische Phase wird dann abgetrennt über Magnesiumsulfat, getrocknet und das Lösungsmittel im Wasserstrahlvakuum abdestilliert. Letzte Lösungsmittelreste werden durch kurzes Andestillieren bei 2 mbar/60°C Badtemperatur entfernt. Man erhält dann 7 g (36,8 % der Theorie) 2,2-dimethyl-3-(2-trifluormethyl-2-phenylvinyl)-cyclopropancarbonsäure als sehr zähes hellgelbes Öl.

Analog erhält man:

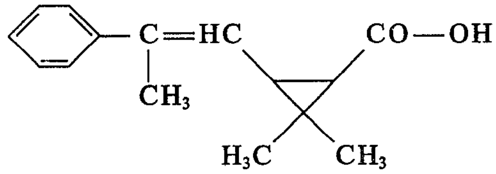 zähes Öl

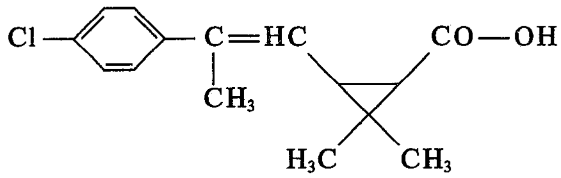 zähes Öl

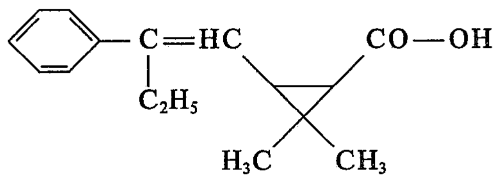 zähes Öl

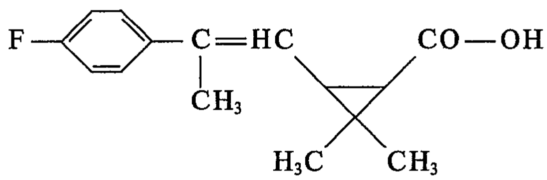 zähes Öl

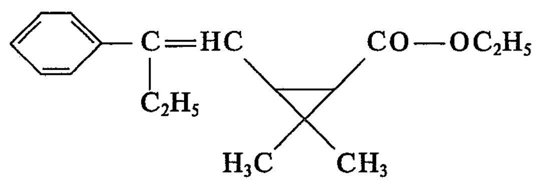

Zu einer Mischung von 24 g (0,214 Mol) Kalium-tert.-butylat und 300 ml wasserfreiem Tetrahydrofuran werden bei 20—25°C und unter Rühren 51,2 g (0,2 Mol) 1-Phenylpropyl-phosphonsäurediethylester, gelöst in 30 ml wasserfreiem Tetrahydrofuran, zugetropft. Nachdem noch 2 Stunden bei 20—25°C nachgerührt wurde, werden 34 g (0,2 Mol) cis/trans-2,2-Dimethyl-3-formyl-cyclopropancarbonsäureethylester, gelöst in 50 ml wasserfreiem Tetrahydrofuran, unter Rühren bei 25°C zugetropft. Anschließend wird noch 6 Stunden bei 60°C nachgerührt. Die Reaktionsmischung wird dann mit 500 ml Wasser versetzt und 2mal mit je 300 ml Methylenchlorid extrahiert. Die organische Phase wird abgetrennt, über Magnesiumsulfat getrocknet, das Lösungsmittel im Wasserstrahlvakuum abdestilliert und der Rückstand im Vakuum destilliert. Man erhält 28,3 g (52 % der Theorie) 2,2-Dimethyl-3-(2-ethyl-2-phenyl-vinyl)-cyclopropancarbonsäureethylester (Isomerengemisch) als gelbes Öl mit dem Siedepunkt von 142—150°C/2 mbar.

Analog erhält man:

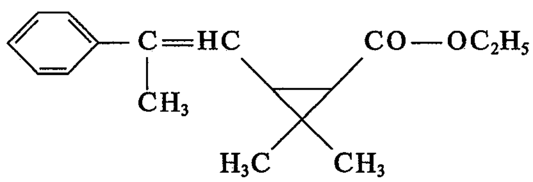 Siedepunkt: 140–150°C

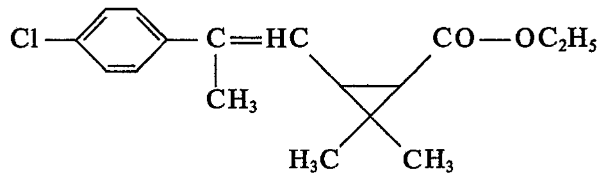

Siedepunkt: 160–175°C

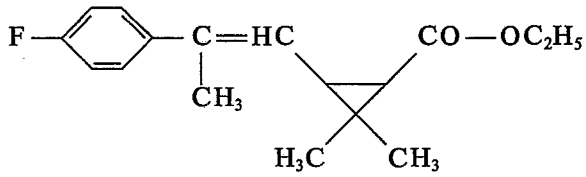

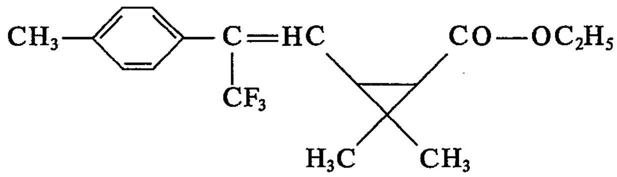

Eine Mischung von 32 g (0,133 Mol) 1,1,1-Trifluor-2-(4-methyl-phenyl)-5-methyl-2,4-hexadien, 1,2 g Kupferpulver und 1,5 g Kupfersulfat (wasserfrei) wird auf 110–120°C erhitzt und dann unter Rühren ebenfalls bei 110–120°C eine Mischung von 16 g (0,067 Mol) 1,1,1-Trifluor-(4-methyl-phenyl)-5-methyl-2,4-hexadien und 22,8 g (0,2 Mol) Diazoessigsäureethylester, sehr langsam, innerhalb von 4 Stunden, zugetropft. Nach beendeter Stickstoffentwicklung wird die Mischung abgekühlt, mit 300 ml Methylenchlorid verdünnt und dann filtriert. Das Filtrat wird mit 500 ml Wasser ausgeschüttelt, anschließend wird die organische Phase abgetrennt, über Magnesiumsulfat getrocknet und dann das Lösungsmittel im Wasserstrahlvakuum abdestilliert. Der ölige Rückstand wird im Vakuum destilliert.

Man erhält dabei zwei Fraktionen:

Fraktion 1: Siedepunkt 80–93°C/2 mbar;
Fraktion 2: Siedepunkt 95–145°C/2 mbar.

Fraktion 1 erweist sich als nicht umgesetztes 1,1,1-Trifluor-2-(4-methyl-phenyl)-5-methyl-2,4-hexadien.

Fraktion 2 wird nochmals destilliert.

Man erhält dann 12,2 g (18,7 % der Theorie) 2,2-Dimethyl-3-(2-trifluormethyl-2-(4-methyl-phenyl-vinyl)-cyclopropancarbonsäure-ethylester als gelbes Öl mit dem Siedepunkt 122–145°C/2 mbar.

Analog erhält man:

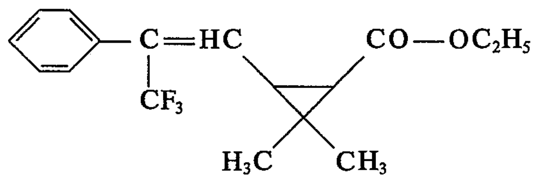

Siedepunkt: 110–135°C

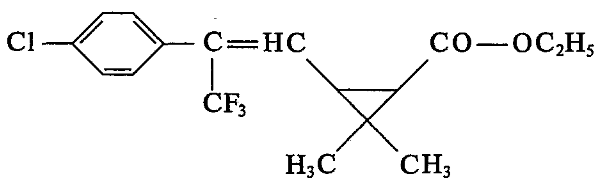

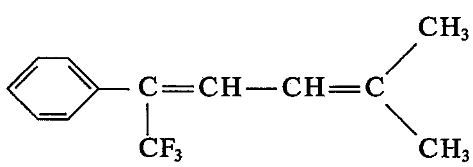

Zu einer Suspension von 41,1 g (0,1 Mol) trockenem 3,3-Dimethylallyl-triphenylphosphoniumbromid in 300 ml wasserfreiem Tetrahydrofuran werden unter Stickstoff bei 0°C und unter Rühren, 65 ml einer 15%igen Lösung von n-Butyllithium in Hexan zugetropft. Die so erhaltene tiefrote Lösung wird noch 15 Minuten bei 0°C gerührt und dann bei 0–10°C 17,4 g (0,1 Mol) $\omega,\omega,\omega$-Trifluoracetophenon zugetropft. Anschließend wird so lange bei Raumtemperatur gerührt, bis Entfärbung eingetreten ist (ca. 12 Stunden). Das Reaktionsgemisch wird dann mit 600 ml Wasser versetzt und 5mal mit je 200 ml Petroläther extrahiert. Die Petrolätherphasen werden über Magnesiumsulfat getrocknet und dann das Lösungsmittel am Rotationsverdampfer im Wasserstrahlvakuum abgezogen. Der Rückstand wird mit 150 ml n-Hexan versetzt und dann restliches Triphenylphosphinoxid filtriert. Anschließend wird vom Filtrat bei Normaldruck das Lösungsmittel abdestilliert und der ölige Rückstand dann im Vakuum destilliert. Man erhält 12,8 g (56,6 % der Theorie) 1,1,1-Trifluor-2-phenyl-5-methyl-hexa-2,4-dien als leicht rötliche Flüssigkeit mit dem Siedepunkt 80–85°C bei 3 mbar.

Analog erhält man:

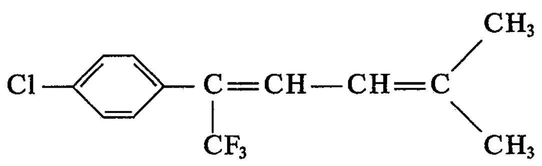

Siedepunkt: 101–103°C

**Patentansprüche**

1. 2-Phenyl-alken-1-yl-cyclopropan-carbonsäuren und -ester der Formel

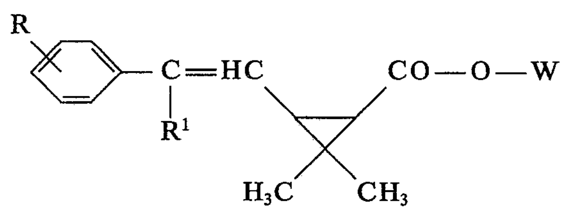

in welcher

R für Wasserstoff oder Halogen steht,
$R^1$ für gegebenenfalls halogen-substituiertes Alkyl steht und
W für Wasserstoff, $C_{1-4}$-Alkyl oder für einen Rest der Formel

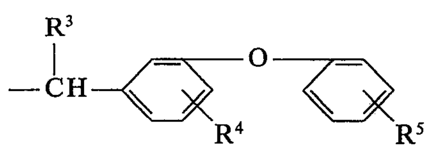

wobei

$R^3$ für Wasserstoff, CN, $C{\equiv}CH$, $-CH_3$, $-C_2H_5$ steht,
$R^4$ und $R^5$ gleich oder verschieden sind und für Wasserstoff, Fluor, Chlor oder Brom stehen,

steht mit Ausnahme von 3-(2-Phenyl-2-trifluormethylvinyl)-2,2-dimethyl-cyclopropan-1-carbonsäure-3-phenoxybenzylester.

2. 2-Phenyl-alken-1-yl-cyclopropan-carbonsäure-ester der Formel I

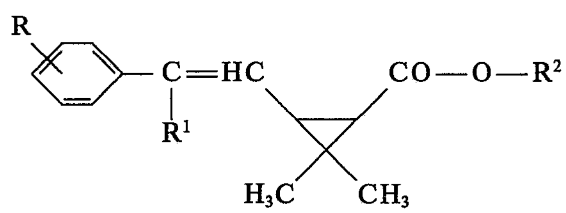

(I)

in welcher

R für Wasserstoff oder Halogen steht,
$R^1$ für gegebenenfalls halogen-substituiertes Alkyl steht und

$R^2$ für einen Rest der Formel

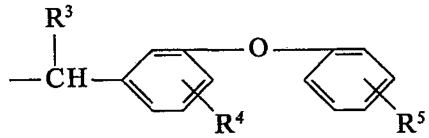

wobei
$R^3$, $R^4$, $R^5$ die in Anspruch 1 angegebene Bedeutung haben,

steht mit Ausnahme von 3-(2-Phenyl-2-trifluormethyl-vinyl)-2,2-dimethyl-cyclopropan-1-carbonsäure-3-phenoxy-benzylester.

3. Verfahren zur Herstellung von 2-Phenyl-alken-1-yl-cyclopropan-carbonsäureestern der Formel I

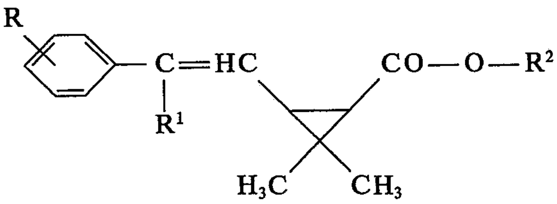
(I)

in welcher

R für Wasserstoff oder Halogen steht,
$R^1$ für gegebenenfalls halogen-substituiertes Alkyl steht und
$R^2$ für einen Rest der Formel

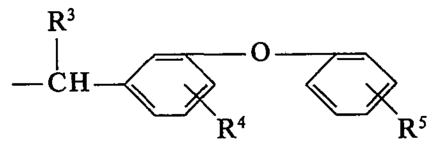

wobei

$R^3$ für Wasserstoff, CN, $-C{\equiv}CH$, $-CH_3$, $-C_2H_5$ steht,
$R^4$ und $R^5$ gleich oder verschieden sind und für Wasserstoff, Fluor, Chlor oder Brom stehen,

steht mit Ausnahme von 3-(2-Phenyl-2-trifluormethyl-vinyl)-2,2-dimethyl-cyclopropan-1-carbonsäure-3-phenoxybenzylester, dadurch gekennzeichnet, daß man 2-Phenyl-alken-1-yl-cyclopropan-carbonsäuren der Formel II

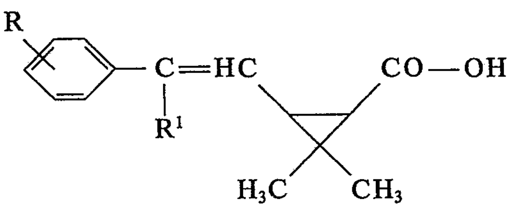
(II)

in welcher
R und $R^1$ die oben angegebenen Bedeutungen haben,

oder reaktionsfähige Derivate derselben, mit Alkoholen der Formel III

$$HO-R^2 \qquad (III)$$

in welcher
$R^2$ die oben angegebene Bedeutung hat,

oder mit reaktionsfähigen Derivaten derselben, gegebenenfalls unter Verwendung von Verdünnungsmitteln umsetzt.

4. 2-Phenyl-alken-1-yl-cyclopropan-carbonsäuren der Formel II

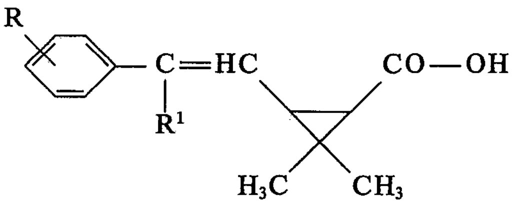

(II)

in welcher

R für Wasserstoff oder Halogen steht,
$R^1$ für gegebenenfalls halogen-substituiertes Alkyl steht.

5. Verfahren zur Herstellung von 2-Phenyl-alken-1-yl-cyclopropancarbonsäuren der Formel II

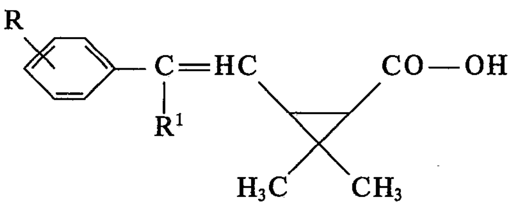

(II)

in welcher

R für Wasserstoff oder Halogen steht,
$R^1$ für gegebenenfalls halogen-substituiertes Alkyl steht,

dadurch gekennzeichnet, daß man Alkylester der Formel II b

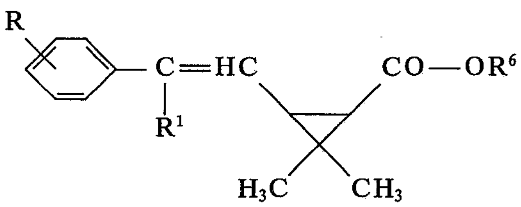

(IIb)

in welcher

R und $R^1$ die oben angegebenen Bedeutungen haben und
$R^6$ für $C_1-C_4$-Alkyl steht,

verseift.

6. 2-Phenyl-alken-1-yl-cyclopropancarbonsäurealkylester der Formel II b

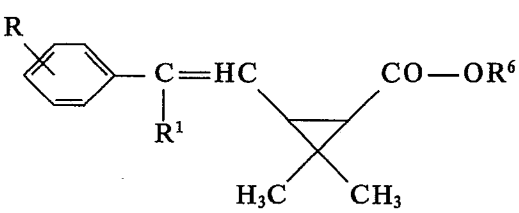

(IIb)

in welcher

R für Wasserstoff oder Halogen steht,
$R^1$ für gegebenenfalls halogen-substituiertes Alkyl steht und
$R^6$ für $C_{1-4}$-Alkyl steht.

7. Verfahren zur Herstellung der 2-Phenyl-alken-1-yl-cyclopropan-carbonsäurealkylester der Formel II b gemäß Anspruch 6, dadurch gekennzeichnet, daß man

(a) 1-Phenyl-alkan-phosphonsäureester der Formel V

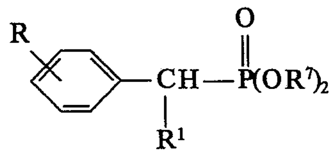

(V)

in welcher

R und $R^1$ die in Anspruch 6 angegebenen Bedeutungen haben und
$R^7$ für $C_1-C_4$-Alkyl, Phenyl oder $C_2-C_5$-Alkandiyl steht,

mit 2,2-Dimethyl-3-formyl-cyclopropan-1-carbonsäurealkylestern der Formel VI

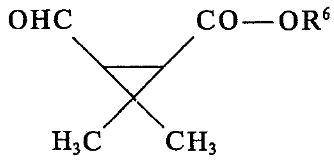

(VI)

in welcher

$R^6$ für $C_1-C_4$-Alkyl steht,

in Gegenwart einer Base und gegebenenfalls in Gegenwart eines Verdünnungsmittels bei Temperaturen zwischen 0 und 100°C umsetzt, oder

(b) Diene der Formel VII

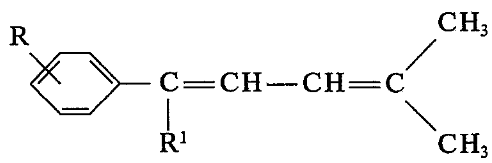

(VII)

in welcher
R und $R^1$ die in Anspruch 6 angegebenen Bedeutungen haben,

mit Diazoessigsäureestern der Formel VIII

$N_2CH—CO—OR^6$ (VIII)

in welcher
$R^6$ für $C_1-C_4$-Alkyl steht,

in Gegenwart eines Katalysators bei Temperaturen zwischen 50 und 200°C umsetzt.

8. Insektizide und/oder akarizide Mittel, gekennzeichnet durch einen Gehalt an mindestens einem 2-Phenyl-alken-1-yl-cyclopropan-carbonsäureester der Formel I.

9. Verfahren zur Bekämpfung von Insekten und/oder Spinnentieren, dadurch gekennzeichnet, daß man 2-Phenyl-alken-1-yl-cyclopropan-carbonsäureester der Formel I auf Insekten und/oder Spinnentiere und/oder ihren Lebensraum einwirken läßt.

**Claims**

1. 2-Phenyl-alk-1-enyl-cyclopropane-carboxylic acids and esters of the formula

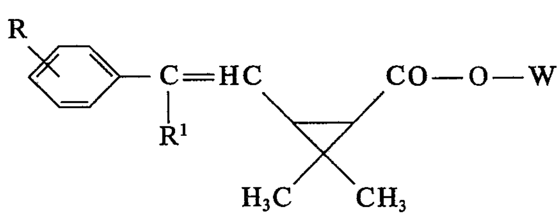

in which

R represents hydrogen or halogen,
$R^1$ represents optionally halogen-substituted alkyl and
W represents hydrogen, $C_{1-4}$-alkyl or a radical of the formula

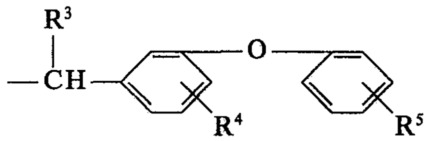

wherein

$R^3$ represents hydrogen, CN, $C{\equiv}CH$, $-CH_3$, or $-C_2H_5$, and
$R^4$ and $R^5$ are identical or different and represent hydrogen, fluorine, chlorine or bromine,

with the exception of 3-(2-phenyl-2-trifluoromethyl-vinyl)-2,2-dimethyl-cyclopropane-1-carboxylic acid 3-phenoxy-benzyl ester.

2. 2-Phenyl-alk-1-enyl-cyclopropane-carboxylic acid esters of the formula I

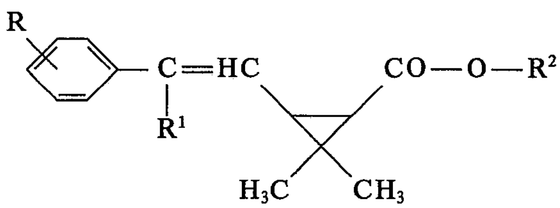

(I)

in which

R represents hydrogen or halogen,
$R^1$ represents optionally halogen-substituted alkyl and
$R^2$ represents a radical of the formula

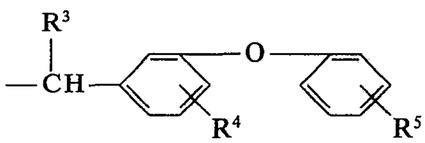

wherein
$R^3$, $R^4$ and $R^5$ have the meaning indicated in Claim 1,

with the exception of 3-(2-phenyl-2-trifluoromethyl-vinyl)-2,2-dimethyl-cyclopropane-1-carboxylic acid 3-phenoxy-benzyl ester.

3. Process for the preparation of 2-Phenyl-alk-1-enyl-cyclopropane-carboxylic acid esters of the formula I

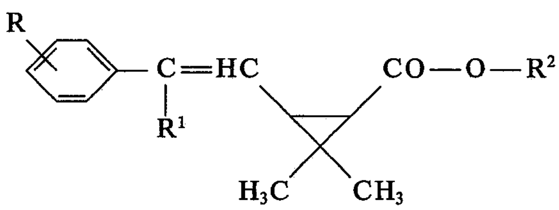

(I)

in which

R represents hydrogen or halogen,
$R^1$ represents optionally halogen-substituted alkyl and
$R^2$ represents a radical of the formula

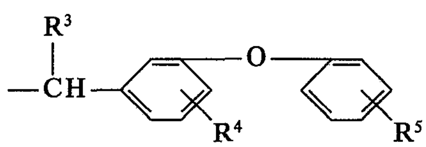

wherein

$R^3$ represents hydrogen, CN, $-C\equiv CH$, $-CH_3$ or $-C_2H_5$, and
$R^4$ and $R^5$ are identical or different and represent hydrogen, fluorine, chlorine or bromine,

with the exception of 3-(2-phenyl-2-trifluoromethyl-vinyl)-2,2-dimethyl-cyclopropane-1-carboxylic acid 3-phenoxy-benzyl ester, characterised in that 2-phenyl-alk-1-enyl-cyclopropane-carboxylic acids of the formula II

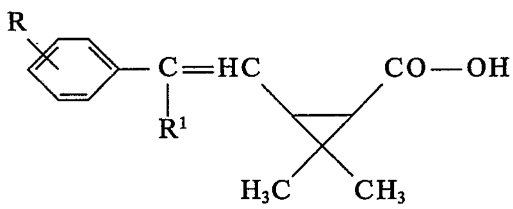
(II)

in which
R and $R^1$ have the meanings indicated above,

or reactive derivatives thereof, are reacted with alcohols of the formula III

$$HO-R^2 \quad (III)$$

in which
$R^2$ has the meaning indicated above,

or with reactive derivatives thereof, of appropriate using diluents.

4. 2-Phenyl-alk-1-enyl-cyclopropane-carboxylic acids of the formula II

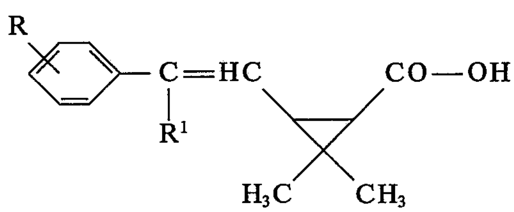
(II)

in which

R represents hydrogen or halogen, and
$R^1$ represents optionally halogen-substituted alkyl.

5. Process for the preparation of 2-Phenyl-alk-1-enyl-cyclopropanecarboxylic acids of the formula II

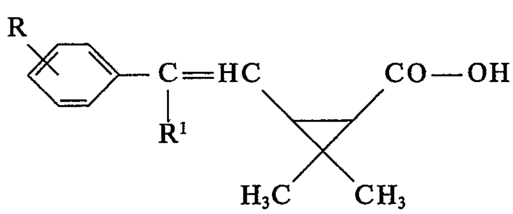
(II)

in which

R represents hydrogen or halogen, and
$R^1$ represents optionally halogen-substituted alkyl,

characterised in that alkyl esters of the formula II b

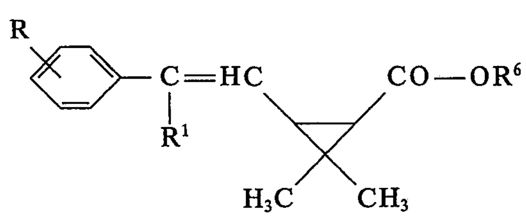
(IIb)

in which

R and $R^1$ have the meanings indicated above and
$R^6$ represents $C_1-C_4$-alkyl,

are saponified.

6. 2-Phenyl-alky-1-enyl-cyclopropanecarboxylic acid alkyl esters of the formula II b

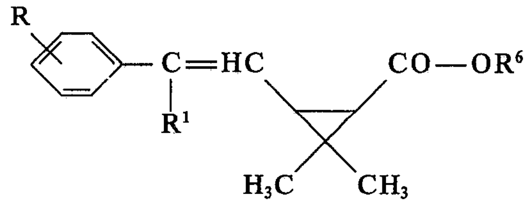

(IIb)

in which

R represents hydrogen or halogen,
$R^1$ represents optionally halogen-substituted alkyl, and
$R^6$ represents $C_{1-4}$-alkyl.

7. Process for the preparation of the 2-phenyl-alk-1-enylcyclopropane-carboxylic acid alkyl esters of the formula II b according to Claim 6, characterised in that

(a) 1-phenyl-alkane-phosphonic acid esters of the formula V

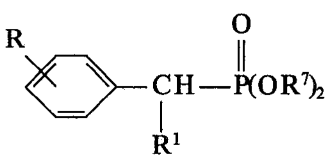

(V)

in which

R and $R^1$ have the meanings indicated in Claim 6, and
$R^7$ represents $C_1-C_4$-alkyl, phenyl or $C_2-C_5$-alkanediyl

are reacted with 2,2-dimethyl-3-formyl-cyclopropan-1-carboxylic acid alkyl esters of the formula IV

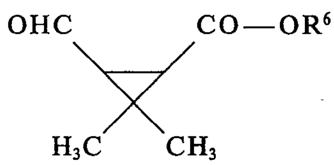

(VI)

in which

$R^6$ represents $C_1-C_4$-alkyl,

in the presence of a base and optionally in the presence of a diluent at temperatures between 0 and 100°C, or

(b) dienes of the formula VII

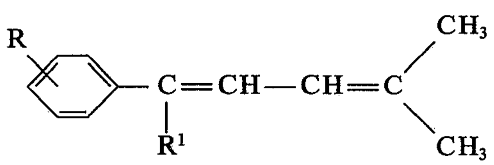

(VII)

in which
R and $R^1$ have the meanings indicated in Claim 6,

are reacted with diazoacetic acid esters of the formula VIII

$$N_2CH—CO—OR^6 \qquad (VIII)$$

in which
$R^6$ represents $C_1-C_4$-alkyl,

in the presence of a catalyst, at temperatures between 50 and 200°C.

8. Insecticidal and/or acaricidal agents, characterised in that they contain at least one 2-phenyl-alk-1-enyl-cyclopropanecarboxylic acid ester of the formula I.

9. Process for combating insects and/or arachnidae, characterised in that 2-phenyl-alk-1-enyl-cyclopropanecarboxylic acid esters of the formula I are allowed to act on insects and/or arachnidae and/or their environment.

**Revendications**

1. Acides 2-phénylalcène-1-yl-cyclopropane-carboxyliques et leurs esters, de formule

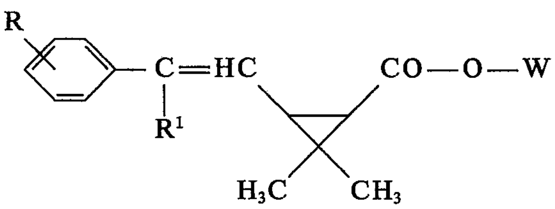

dans laquelle

R représente l'hydrogène ou un halogène
$R^1$ est un groupe alkyle éventuellement substitué par un halogène et
W est l'hydrogène, un groupe alkyle en $C_1$ à $C_4$ ou un reste de formule

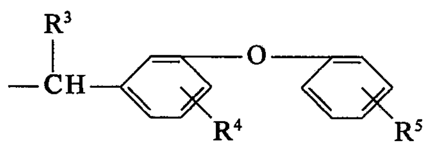

dans laquelle

$R^3$ représente l'hydrogène, un groupe CN, C≡CH, $-CH_3$, $-C_2H_5$,
$R^4$ et $R^5$ sont égaux ou différents et représentent l'hydrogène, le fluor, le chlore ou le brome,

à l'exception de l'ester 3-phénoxybenzyle de l'acide 3-(2-phényl-2-trifluorométhylvinyl)-2,2-diméthyl-cyclopropane-1-carboxylique.

2. Ester d'acide 2-phénylalcène-1-yl-cyclopropane-carboxylique de formule I

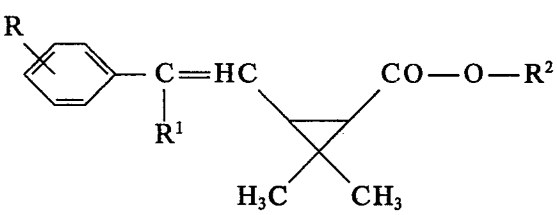

(I)

dans laquelle

R est l'hydrogène ou un halogène,
$R^1$ est un groupe alkyle éventuellement substitué par un halogène et
$R^2$ est un reste de formule

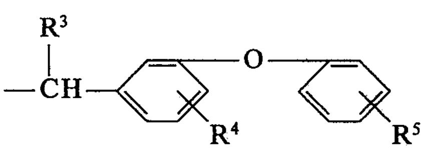

dans laquelle
$R^3$, $R^4$, $R^5$ ont la définition indequée dans la revendication 1,

à l'exception de l'ester 3-phénoxybenzylique de l'acide 3-(2-phényl-2-trifluorométhylvinyl)-2,2-diméthylcyclopropane-1-carboxylique.

3. Procédé de production d'esters d'acides 2-phénylalcène-1-yl-cyclopropane-carboxylique de formule I

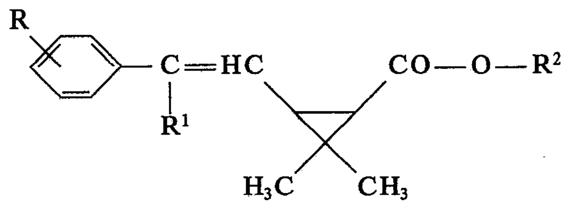

(I)

dans laquelle

R est l'hydrogène ou un halogène,
$R^1$ est un groupe alkyle éventuellement substitué par un halogène et
$R^2$ représente un reste de formule

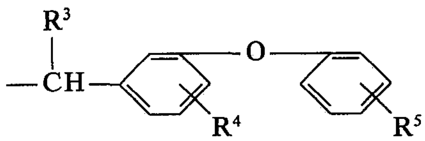

dans laquelle

$R^3$ est l'hydrogène, un groupe CN, $-C{\equiv}CH$, $-CH_3$, $-C_2H_5$,
$R^4$ et $R^5$ sont égaux ou différents et représentent l'hydrogène, le fluor, le chlore ou le brome,

à l'exception de l'ester 3-phénoxybenzyle de l'acide 3-(2-phényl-2-trifluorométhylvinyl)-2,2-dimethylcyclopropane-1-carboxylique, caractérisé en ce qu'on fait réagir des acides 2-phénylalcène-1-yl-cyclopropane-carboxyliques formule II

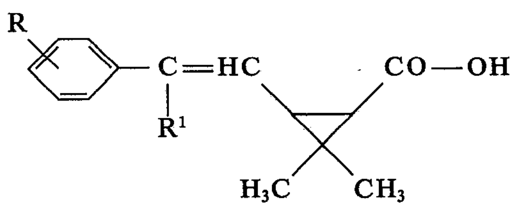

(II)

dans laquelle
R et $R^1$ ont les définitions indiquées ci-dessus,

ou leurs dérivés réactifs, avec des alcools de formule III

$$HO{-}R^2 \qquad \text{(III)}$$

dans laquelle
$R^2$ a la définition indiquée ci-dessus,

ou avec leurs dérivés réactifs, en utilisant éventuellement des diluants.

4. Acides 2-phénylalcène-1-yl-cyclopropane-carboxyliques de formule II

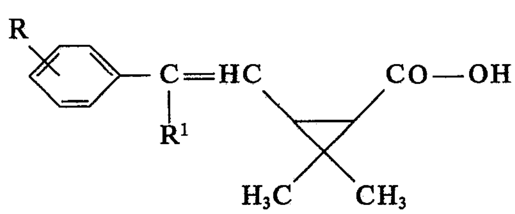

(II)

dans laquelle

R est l'hydrogène ou un halogène,
$R^1$ est un groupe alkyle éventuellement substitué par un halogène.

5. Procédé de production d'acides 2-phénylalcène-1-yl-cyclopropane-carboxyliques de formule II

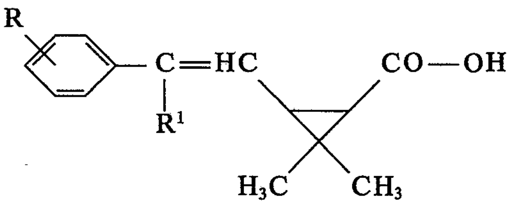

(II)

dans laquelle

R est l'hydrogène ou un halogène,
$R^1$ est un groupe alkyle éventuellement substitué par un halogène,

caractérisé en ce qu'on saponifie des esters d'alkyle de formule II b

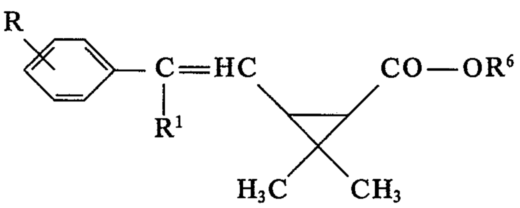

(IIb)

dans laquelle

R et $R^1$ ont les définitions indiquées ci-dessus et
$R^6$ est un groupe alkyle en $C_1$ à $C_4$.

6. Esters alkyliques d'acides 2-phénylalcène-1-yl-cyclopropane-carboxyliques de formule II b

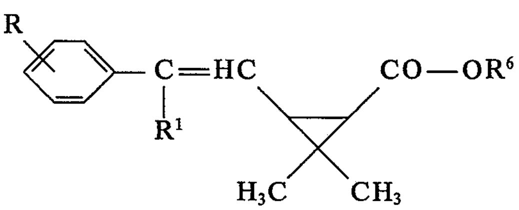

(IIb)

dans laquelle

R est l'hydrogène ou un halogène,
$R^1$ est un groupe alkyle éventuellement substitué par un halogène,
$R^6$ est un groupe alkyle en $C_1$ à $C_4$.

7. Procédé de production d'esters alkyliques d'acides 2-phénylalcène-1-yl-cyclopropane-carboxyliques de formule II b suivant la revendication 6, caractérisé en ce que

(a) on fait réagir un ester d'acide 1-phénylalcane-phosphonique de formule V

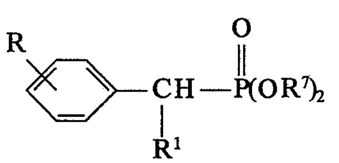

(V)

dans laquelle

R et $R^1$ ont les définitions indiquées dans la revendication 6 et
$R^7$ est un groupe alkyle en $C_1$ à $C_4$, phényle ou alcanediyle en $C_2$ à $C_5$,

avec des esters alkyliques d'acide 2,2-diméthyl-3-formylcyclopropane-1-carboxylique de formule VI

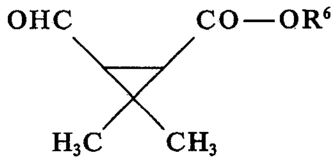

(VI)

dans laquelle

$R^6$ est un groupe alkyle en $C_1$ à $C_4$,

en présence d'une base et le cas échéant en présence d'un diluant, à des températures comprises entre 0 et 100°C, ou

(b) on fait réagir des diènes de formule VII

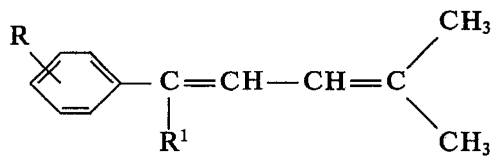

(VII)

dans laquelle
R et $R^1$ ont les définitions indiquées dans la revendication 6,

avec des esters d'acide diazoacétique de formule VIII

$$N_2CH-CO-OR^6 \qquad (VIII)$$

dans laquelle
$R^6$ est un groupe alkyle en $C_1$ à $C_4$,

en présence d'un catalyseur, à des températures comprises entre 50 et 200°C.

8. Compositions insecticides et/ou acaricides caractérisées par une teneur en au moins un ester d'acide 2-phénylalcène-1-yl-cyclopropane-carboxylique de formule I.

9. Procédé pour combattre des insectes et/ou des acariens, caractérisé en ce qu'on fait réagir des esters d'acides 2-phénylalcène-1-yl-cyclopropane-carboxyliques de formule I sur des insectes et/ou sur des acariens et/ou sur leurs milieux.